# EUROPÄISCHE PATENTANMELDUNG

(11) **EP 4 570 606 A1**
(43) Veröffentlichungstag der Anmeldung: **18.06.2025**
(21) Anmeldenummer: 24214708.0
(22) Anmeldetag: 22.11.2024
(51) Int. Cl.: B60T 17/22, B60T 8/17, B60T 8/171, B60T 8/172, F16D 66/00, B60T 13/66

(54) **VERFAHREN UND VORRICHTUNG ZUM VORHERSAGEN EINES BREMSLEISTUNGSNIVEAUS ODER EINER BREMSLEISTUNGS-PERFORMANCE MINDESTENS EINER BREMSE ODER EINES BREMSSYSTEMS EINES SCHIENENFAHRZEUGS ODER EINES VERBANDS MEHRERER SCHIENENFAHRZEUGE**

(30) Priorität: 14.12.2023 DE 102023135164
(71) Anmelder: Voith Patent GmbH, 89522 Heidenheim (DE)
(72) Erfinder: Schilling, Roland, 74535 Mainhardt (DE)
(74) Vertreter: Meissner Bolte Partnerschaft mbB

(57) **Zusammenfassung**

Die Erfindung betrifft ein Verfahren zum Vorhersagen eines Bremsleistungsniveaus oder einer Bremsleistungs-Performance mindestens einer Bremse oder eines Bremssystems (5) eines Schienenfahrzeugs (1.1-1.4; 2) oder eines Verbands (100) mehrerer Schienenfahrzeuge (1.1-1.4; 2), wobei das Verfahren die folgenden Verfahrensschritte aufweist:
(i) Erfassen von mindestens einem das Bremsleistungsniveau oder die Bremsleistungs-Performance der mindestens einen Bremse oder des Bremssystems (5) beeinfließenden Parameters;
(ii) Auswerten des mindestens einen das Bremsleistungsniveau oder die Bremsleistungs-Performance der mindestens einen Bremse oder des Bremssystems (5) beeinfließenden Parameters; und
(iii) Ausgeben eines Ergebnisses der Auswertung, welches:
- eine Vorhersage mit Bezug auf das Bremsleistungsniveau oder der Bremsleistungs-Performance der mindestens einen Bremse oder des Bremssystems (5) betrifft; und/oder
- eine Abschätzung betrifft, wann und ggf. wie eine Konditionierung der mindestens einen Bremse oder des Bremssystems (5) durchgeführt werden sollte oder durchzuführen ist.

## Beschreibung

Die vorliegende Erfindung betrifft allgemein das Fachgebiet der spurgeführten Fahrzeuge und insbesondere schienengebundene Fahrzeuge. Im Einzelnen betrifft die Erfindung Bremsanlagen für spurgeführte Fahrzeuge, insbesondere Schienenfahrzeuge, welche im Hinblick auf ihre Bremswirkung überwacht werden.

Gemäß einem Aspekt der vorliegenden Erfindung betrifft diese eine optimierte Bremsanlage bzw. Bremsanlagensteuerung für einen Güterwagen eines Schienenfahrzeugs.

Bei Schienenfahrzeugen hängt die Wirkung einer Bremse oder einer Antriebseinrichtung entscheidend von dem Kraftschluss zwischen Rädern und Schiene ab, denn eine Antriebskraft oder Bremskraft wird über die Räder des Schienenfahrzeugs auf die Schiene übertragen. Dabei bestimmt ein als Adhäsionsbeiwert oder Kraftschlussbeiwert bezeichneter Parameter das auf die Schiene übertragbare Maß an Bremskraft oder Antriebskraft. Wird mehr Kraft zum Bremsen oder Beschleunigen des Schienenfahrzeugs auf ein Rad ausgeübt, als gemäß eines herrschenden Kraftschlusses über dem Rad-Schiene-Kontakt aufgenommen werden kann, kann dies zu einem Gleiten, Schleudern oder Blockieren des Rads führen, welches ein unerwünschter Zustand ist. Der Kraftschluss zwischen einem Rad und einer Schiene hängt stark von den Reibungsbedingungen zwischen Rad und Schiene ab. Bei hoher Reibung ist ein hoher Kraftschluss möglich, während bei einer niedrigen Reibung, beispielsweise bei Wasser oder Eis auf der Schiene, nur ein niedriger Kraftschluss herrscht. Um die Effizienz insbesondere von Bremsungen zu verbessern, können Schienenfahrzeuge mit Partikelstreuanlagen ausgestattet sein, über die beispielsweise Sand als Streugut auf eine Schiene ausgebracht werden kann. Durch den Sand kann die Adhäsion zwischen Rad und Schiene, und somit der Kraftschluss, verbessert werden.

Bei der Deckung heutiger Mobilitäts- und Transportbedarfe spielt der Schienenverkehr eine zentrale Rolle, wobei seine Akzeptanz gerade auch an der Betriebsstabilität, etwa in Form von Pünktlichkeit und Zuverlässigkeit, hängt. Hierauf hat die Bremswegstabilität, also die Frage, inwieweit Züge zuverlässig innerhalb betrieblich definierter Bereiche zum Stillstand kommen, um beispielsweise Signale oder Bahnstationen nicht zu überfahren, maßgeblichen Einfluss. Gleiches gilt unter Berücksichtigung heutiger und zukünftiger Signaltechnik für die Perspektive einer verbesserten Schieneninfrastrukturauslastung durch höhere Zugfolgen, speziell bei automatisiertem Bahnbetrieb. Auch hier hat die Stabilität des Bremswegs - insbesondere bei verminderten Kraftschlussbedingungen, wie unter Nässe oder auf Herbstlaub - bedeutenden Einfluss.

Um ein weiteres Wachstum des Schienengüterverkehrs als umweltfreundlichstes Transportmittel zu ermöglichen, ist es darüber hinaus notwendig, dass der Schienengüterverkehr insgesamt leiser wird.

Lärm ist störend und ein Gesundheitsrisiko. Der lärmbedingte psychische Stress kann krankmachen: insbesondere Herz-Kreislauf-Erkrankungen bis hin zum Herzinfarkt können die Folge von chronischer Belastung durch Verkehrslärm sein. Von daher ist der Lärmschutz ein wichtiger Teil von Verkehrspolitik und Verkehrsplanung. Insbesondere um die klimapolitischen Ziele der Bundesregierung zu erreichen, muss das Verkehrsaufkommen auf der Schiene weitersteigen, infolgedessen der Lärmschutz im Schienenverkehr immer wichtiger wird.

Ein entscheidendes Element für die Reduktion der Lärmemission an der lärmerzeugenden Quelle ist die Umstellung des Güterwagenparks auf Verbundstoffbremssohlen (LL- oder K-Sohlen). Durch diese auch allgemein als "Flüsterbremsen" bezeichneten Bremsen mit Verbundstoffbremssohlen werden die Wagenräder nicht mehr aufgeraut und dadurch wird ein bis zu 10 Dezibel (A) leiseres Rollgeräusch erreicht. Dies kommt in der menschlichen Wahrnehmung einer Halbierung des Lärmpegels gleich.

Durch das ab Mitte Dezember 2020 geltende Schienenlärmschutzgesetz (SchlärmschG) wird der Einsatz dieser Flüsterbremsen verpflichtend. Im März 2020 waren daher von den in Deutschland verkehrenden Güterwagen bereits über 85% mit LL- oder K-Sohlen ausgerüstet.

Die Lärmminderung wird somit insbesondere über Verbundstoff-Bremssohlen erzielt, welche ein Aufrauen der Räder und damit die wesentliche Ursache der Lärmentstehung verhindern.

Verbundstoff-Bremssohlen können jedoch unter bestimmten Bedingungen, insbesondere unter harten winterlichen Bedingungen, einen Teil ihrer Bremsleistung verlieren. Dieser Verlust kann durch betriebliche Maßnahmen teilweise ausgeglichen werden, beispielsweise indem bei einem Zugverband, der mit Komposit-Bremssohlen ausgerüstet ist, weitere Wagen mit herkömmlichen Grauguss-Bremssohlen ergänzt werden, um auch unter harten winterlichen Bedingungen ein akzeptables Bremsleistungsniveau zu gewährleisten. Alternativ oder zusätzlich hierzu ist es denkbar, die Höchstgeschwindigkeit auf 80 km/h zu senken, was jedoch eine weitere Kapazitätsverringerung des bereits gesättigten Eisenbahnnetzes zur Folge haben würde.

Dieses Problem tritt nicht nur bei Zügen bzw. Wagen auf, die mit Komposit-Bremssohlen ausgerüstet sind. Allgemein kann beim Betrieb von Schienenfahrzeugen insbesondere unter winterlichen Bedingungen es in Abhängigkeit von der Konstruktion, der Temperatur, der Luftfeuchtigkeit, den Schneebedingungen und den Winterverhältnissen zu Schneeanlagerungen und Vereisungen der Bremsgestänge und der Reibflächen der Bremseinheiten kommen.

Die traditionellen Klotzbremsen mit Grauguss-Bremssohlen zeigen dabei eine im Vergleich zu Scheibenbremsen oder zu Bremsen mit Komposit-Bremssohlen geringere Neigung zur Vereisung, weil wenigstens ein Reibparameter, nämlich die Lauffläche des Rads, bei jeder Radumdrehung beim Schienenkontakt von Eis befreit werden kann. Gleichwohl besteht aber auch bei Klotzbremsen, insbesondere wenn diese mit Komposit-Bremssohlen ausgerüstet sind, die Gefahr der Vereisung des Bremsgestänges.

Demgemäß besteht ein Bedarf dahingehend, sicherzustellen, dass das Bremssystem eines Schienenfahrzeugs oder eines Schienenfahrzeugverbands auch bei harten winterlichen Bedingungen einwandfrei funktioniert, ohne dass hierzu das Schienenfahrzeug bzw. der Schienenfahrzeugverband mit weiteren Wagen mit herkömmlichen Grauguss-Bremssohlen ergänzt werden muss, und insbesondere ohne dass hierzu die Höchstgeschwindigkeit des Schienenfahrzeugs bzw. des Schienenfahrzeugverbands auf beispielsweise 80 km/h reduziert werden muss.

Bremssysteme für Schienenfahrzeuge im Güterverkehr sind üblicherweise mit mechanischen Bremseinrichtungen ausgerüstet, welche Klotzbremsen aufweisen. Hier wird eine von einem Bremszylinder erzeugte Kraft von einem Bremsgestänge übersetzt und auf Bremsklötze übertragen, die direkt auf die Lauffläche der Räder wirken.

Hierbei können sowohl die Schnittstelle Reibbelag/Lauffläche der Räder als auch die Kinematik des Bremsgestänges durch winterliche Bedingungen negativ beeinflusst werden, wie beispielsweise durch Vereisung, gefrierendes Schmelzwasser, Schneestaub (Snow Smoke), etc.

Zur Verbesserung der Bremswirkung unter gewissen Bedingungen ist es bekannt, so genannte Konditionierungsbremsungen vorzunehmen, welche in der Schienenfahrzeugtechnik auch als "Snow Brakes" oder als "Polishing Brakes" genannt werden. Diese können als Fahreranweisung oder automatisiert aktiviert werden.

Bei einer Konditionierungsbremsung werden in der Regel geringe Bremsdrücke verwendet, um zu verhindern, dass das Schienenfahrzeug zu stark abbremst, oder um zu vermeiden, dass zu hohe Gegentraktionsanforderungen auftreten.

Vereisungen können einzelne Bremseinheiten bis hin zu alle Bremseinheiten des Schienenfahrzeugs bzw. Schienenfahrzeugverbands betreffen. Solche Bremsausfälle sind nicht rechtzeitig erkennbar und stellen somit ein akutes Sicherheitsproblem im Schienenverkehr dar.

Im Stand der Technik werden Bremseinheiten von Schienenfahrzeugen während der Fahrt nicht oder zumindest nicht ausreichend überwacht.

Zwar ist es beispielsweise aus der RU 2 298 501 C1 bekannt, die Bremszylinderdrücke durch eine Steuereinrichtung elektronisch zu überwachen, allerdings ist diese Überwachung der Bremseinheiten von Schienenfahrzeugen in der Praxis nicht ausreichend. Bei vereisten oder schwergängigen Bremsgestängen baut sich zwar ein ordnungsgemäßer Bremszylinderdruck auf, jedoch werden die Kräfte im schwergängigen Bremsgestänge abgebaut, ohne eine entsprechende Bremswirkung zu erzielen. Bei vereisten Reibflächen wird ebenfalls nur eine geringe Wirkung erzielt, weil die aufgebrachten Kräfte bei dem relativ geringen Reibwert der vereisten Reibflächen nur zu einer geringen Verzögerung führen können. Der Energieeintrag ist dabei relativ gering, so dass es erst nach einer relativ langen Zeit zum Abschmelzen der vereisten Flächen kommt.

Es ist ebenfalls bekannt, vor Fahrtantritt eine Bremsprobe aus geringer Geschwindigkeit durchzuführen. Damit soll beurteilt werden, ob eine ausreichende Bremswirkung erzielt wird. Größer als das Problem der subjektiven Beurteilung der Bremswirkung ist die Tatsache, dass sich der Zustand der Bremsen während der anschließenden Fahrt jederzeit und nicht vorhersehbar verschlechtern kann.

Als weitere Sicherheitsmaßnahme ist es bekannt, während der Fahrt des Schienenfahrzeugs bzw. des Schienenfahrzeugverbands von einem elektronischen System in bestimmten Zeitabständen eine kurze Bremsprobe einleiten zu lassen. Die Fahrzeitverzögerung kann dabei ermittelt werden, wodurch eine im Augenblick vorliegende Reduzierung der Bremswirkung diagnostizierbar ist. Der Zustand der Bremsen kann sich aber - wie gesagt - während der weiteren Fahrt jederzeit wieder verschlechtern.

Um ein allmähliches Vereisen der einzelnen Bremsen einer Bremseinheit, insbesondere des Bremsgestänges, während der Fahrt zu vermeiden, können die Bremseinheiten in regelmäßigen Abständen von Hand oder elektronisch betätigt werden. Durch die Bewegung der einzelnen Bauteile soll ein Eisansatz verhindert werden. Um einen wirksamen Betätigungsalgorithmus zu finden, sind allerdings umfangreiche Feldversuche erforderlich.

Weil der Vereisungsvorgang jedoch von vielschichtigen klimatischen Bedingungen abhängt, ist der erforderliche Betätigungsalgorithmus ebenfalls witterungsabhängig. Eine häufige Anwendung dieses Verfahrens führt außerdem zu einem erhöhten Energieverbrauch und zu fahrplanrelevanten Zeitverlusten.

Ausgehend von dieser Problemstellung besteht somit ein Bedarf, ein optimiertes Diagnose- und Analysetool anzugeben, um eine Reduzierung eines Bremsleistungsniveaus oder einer Bremsleistungs-Performance einer Bremse oder eines Bremssystems eines Schienenfahrzeugs oder eines Verbands mehrerer Schienenfahrzeuge schnell und zuverlässig vorhersagen zu können.

Insbesondere sollen ein Verfahren sowie eine Vorrichtung zum Vorhersagen eines Bremsleistungsniveaus oder einer Bremsleistungs-Performance mindestens einer Bremse oder eines Bremssystems eines Schienenfahrzeugs oder eines Verbands mehrerer Schienenfahrzeuge bereitgestellt werden, mit welchem bzw. mit welcher eine möglichst genaue Schätzung des aktuellen Bremsleistungsniveaus bzw. der aktuellen Bremsleistungs-Performance der Bremse bzw. des Bremssystems ermöglicht wird.

Eine weitere Aufgabe der Erfindung ist darin zu sehen, ein Verfahren bzw. eine Vorrichtung bereitzustellen, welches bzw. welche auf eine Vielzahl verschiedener Schienenfahrzeuge bzw. Bremsen/Bremssystemen von Schienenfahrzeugen anwendbar ist, und welches auch bei variierenden Betriebsbedingungen zuverlässige Ergebnisse liefert.

Die der Erfindung zu Grunde liegende Aufgabe wird insbesondere durch ein Vorhersageverfahren gemäß dem unabhängigen Patentanspruch 1 gelöst, wobei vorteilhafte Weiterbildungen des Verfahrens in den abhängigen Patentansprüchen 2 bis 11 angegeben sind.

Demgemäß betrifft die Erfindung insbesondere ein Verfahren zum Vorhersagen eines Bremsleistungsniveaus oder einer Bremsleistungs-Performance mindestens einer Bremse oder eines Bremssystems eines Schienenfahrzeugs oder eines Schienenfahrzeugverbands, wobei hierzu zunächst mindestens ein das Bremsleistungsniveau oder die Bremsleistungs-Performance der mindestens einen Bremse oder des Bremssystems beeinfließender Parameter erfasst wird.

Anschließend wird der mindestens eine das Bremsleistungsniveau oder die Bremsleistungs-Performance der mindestens einen Bremse oder des Bremssystems beeinfließender Parameter ausgewertet und entsprechend ein Ergebnis der Auswertung ausgegeben.

Das Ergebnis der Auswertung betrifft insbesondere eine Vorhersage mit Bezug auf das Bremsleistungsniveau oder der Bremsleistungs-Performance der mindestens einen Bremse oder des Bremssystems. Alternativ oder zusätzlich hierzu betrifft das Ergebnis der Auswertung eine Abschätzung, wann und ggf. wie eine Konditionierung der mindestens einen Bremse oder des Bremssystems durchgeführt werden sollte oder durchzuführen ist.

Die Grundlage des erfindungsgemäßen Verfahrens bildet somit den tatsächlichen und aktuellen Anwendungsbereich und Anwendungszeitraum der im Hinblick auf das Bremsleistungsniveau oder der Bremsleistungs-Performance überwachten mindestens einen Bremse bzw. Bremssystems.

Hierbei wird die Erkenntnis ausgenutzt, dass abhängig von dem jeweiligen Einsatz- oder Anwendungsbereich der mindestens einen Bremse die Bremse trotz Außentemperaturen weit unterhalb des Gefrierpunkts und trotz der Verwendung von Verbundstoffbremssohlen (LL- oder K-Sohlen) noch ein hinreichendes Bremsleistungsniveau bzw. eine hinreichende Bremsleistungs-Performance liefert, um das Schienenfahrzeug oder den Schienenfahrzeugverband gemäß einem vorab festgelegten oder festlegbaren Ereignisablauf abbremsen zu können.

Unter dem hierin verwendeten Begriff "Bremsleistung" ist die Bewegungsenergie zu verstehen, die die betreffende Bremse bzw. das betreffende Bremssystem pro Sekunde abbauen kann, also in Wärmeenergie umwandeln kann.

Unter dem Begriff "Bremsleistungs-Performance" ist das Vermögen oder die Fähigkeit des Bremssystems zu verstehen, eine bestimmte Bremsleistungs-Performance liefern zu können.

Unter dem hierin verwendeten Begriff "Bremsleistungsniveau" ist die Bremsleistungs-Performance einer Bremse oder eines Bremssystems zu verstehen, die von der Bremse bzw. dem Bremssystem bei einem vorab festgelegten Bremsdruck erzielbar ist.

Bei dem erfindungsgemäßen Verfahren ist insbesondere vorgesehen, dass als Parameter, welcher das Bremsleistungsniveau oder die Bremsleistungs-Performance der Bremse bzw. des Bremssystems beeinflusst, ein insbesondere mittlerer Abstand zwischen eines Rads oder einer Radlauffläche eines Rads und einem dem Rad zugeordneten Bremsklotz der Bremse ist. Dieser insbesondere mittlere Abstand wird über eine im Bereich des Rads angeordnete Sensorik erfasst, welche insbesondere berührungslos arbeiten kann.

Alternativ ist es aber auch denkbar, dass der Abstand nicht quantitativ bestimmt wird, sondern dass ermittelt wird, ob der insbesondere mittlere Abstand zwischen dem Rad bzw. der Radlauffläche und der Bremsscheibe bzw. dem Bremsklotz einen vorab festgelegten oder festlegbaren Mindestwert erreicht oder unterschritten hat.

An Stelle des insbesondere mittleren Abstands zwischen dem Rad oder Radlauffläche des Rads und dem dem Rad zugeordneten Bremsklotz kann als Parameter, der das Bremsleistungsniveau oder die Bremsleistungs-Performance der Bremse oder des Bremssystems beeinflusst, auch eine Umgebungstemperatur insbesondere im Bereich der mindestens einen Bremse, eine Luftfeuchtigkeit insbesondere im Bereich der mindestens einen Bremse und/oder ein Luftdruck insbesondere im Bereich der mindestens einen Bremse erfasst werden.

Alternativ oder zusätzlich dient eine insbesondere mittlere Temperatur der mindestens einen Bremse als ein das Bremsleistungsniveau oder die Bremsleistungs-Performance beeinfließender Parameter.

Gemäß bevorzugten Weiterbildungen des erfindungsgemäßen Verfahrens ist vorgesehen, dass beim Auswerten des das Bremsleistungsniveau bzw. die Bremsleistungs-Performance beeinfließenden Parameters ein weiterer, insbesondere das Schienenfahrzeug oder den Schienenfahrzeugverband betreffender Parameter mitausgewertet werden. Hierbei kann es sich beispielsweise um das Material des Bremsklotzes der mindestens einen Bremse, um den Typ des Bremsklotzes der mindestens einen Bremse und/oder um ein Alter des Bremsklotzes der mindestens einen Bremse handeln.

Der Begriff "Bremsklotztyp" bzw. "Typ des Bremsklotzes" betrifft insbesondere einen Bremsklotz mit einer LL-Bremssohle, einen Bremsklotz mit einer Komposit-Bremssohle bzw. K-Sohle, oder einen Bremsklotz mit einer (klassischen) Grauguss-Bremssohle.

Als mindestens ein weiterer, insbesondere das Schienenfahrzeug oder den Schienenfahrzeugverband betreffender Parameter kommt auch beispielsweise ein Gesamtgewicht des Schienenfahrzeugs oder des Schienenfahrzeugverbands und/oder ein Gewicht einer von dem Schienenfahrzeug oder dem Schienenfahrzeugverband transportierten Zuladung in Frage.

Gemäß Realisierungen des erfindungsgemäßen Verfahrens ist vorgesehen, dass letztendlich ein Ergebnis ausgegeben wird, welches eine Abschätzung betrifft, wann eine Konditionierung der mindestens einen Bremse oder des Bremssystems durchgeführt werden sollte oder durchzuführen ist, das heißt wann eine Konditionierungsbremsung durchgeführt werden sollte oder durchzuführen ist. Zum Abschätzen, wann eine solche Konditionierung der mindestens einen Bremse oder des Bremssystems durchgeführt werden sollte oder durchzuführen ist, wird insbesondere mindestens einer der folgenden Parameter berücksichtigt:
(a) eine aktuelle Position, insbesondere GPS-Position, des Schienenfahrzeugs oder des Schienenfahrzeugverbands;
(b) eine aktuelle Geschwindigkeit des Schienenfahrzeugs oder des Schienenfahrzeugverbands;
(c) eine in einem für einen zu befahrenden Streckenabschnitt vorgegebene insbesondere mittlere Geschwindigkeit des Schienenfahrzeugs oder des Schienenfahrzeugverbands; und/oder
(d) eine aktuelle örtliche Uhrzeit.

In einer Weiterbildung des erfindungsgemäßen Verfahrens wird beim Erfassen des mindestens einen das Bremsleistungsniveau oder die Bremsleistungs-Performance der mindestens einen Bremse oder des Bremssystems beeinfließenden Parameters ein der mindestens einen Bremse zur Verfügung stellbarer, insbesondere mittlerer Bremsdruck erfasst.

Vorzugsweise wird nach dem Erfassen und Auswerten des mindestens einen das Bremsleistungsniveau oder die Bremsleistungs-Performance der mindestens einen Bremse oder des Bremssystems beeinfließenden Parameters mindestens eine der folgenden Informationen ausgegeben:
- ein in der Zukunft liegender Zeitpunkt und/oder eine in der Zukunft liegende Zeitperiode, wann bzw. in welcher eine Konditionierung der mindestens einen Bremse oder des Bremssystems durchgeführt werden sollte oder durchzuführen ist (Konditionierungsbremsung);
- ein Bremsdruck, mit welchem bei der Konditionierung der mindestens einen Bremse oder des Bremssystems die mindestens eine Bremse oder das Bremssystem zu beaufschlagen ist;
- eine Zeitdauer, über welche bei der Konditionierung der mindestens einen Bremse oder des Bremssystems die mindestens eine Bremse oder das Bremssystem zu konditionieren ist; und/oder
- eine Bremskraft, welche bei der Konditionierung der mindestens einen Bremse oder des Bremssystems von der mindestens einen Bremse oder dem Bremssystem auf das der mindestens einen Bremse oder dem Bremssystem zugeordneten Rad zu beaufschlagen ist.

Zum Auswerten des mindestens einen das Bremsleistungsniveau oder die Bremsleistungs-Performance der mindestens einen Bremse oder des Bremssystems beeinfließenden Parameters werden vorzugsweise der mindestens eine erfasste Parameter und/oder mindestens ein weiterer, insbesondere das Schienenfahrzeug oder den Schienenfahrzeugverband betreffender Parameter in einen Vorhersage-Algorithmus eingegeben, in welchem die eingegebenen Parameter gemäß Klassifikationen in unterschiedliche Kategorien eingeteilt werden, die sich durch charakteristische Muster unterscheiden.

Gemäß Ausführungsvarianten des erfindungsgemäßen Verfahrens ist vorgesehen, dass das Verfahren ferner den Verfahrensschritt des Durchführens einer Lernphase eines Vorhersage-Algorithmus aufweist, wobei in der Lernphase Lerndaten in den Vorhersage-Algorithmus eingegeben werden, und wobei der Vorhersage-Algorithmus in den eingegebenen Lerndaten Muster und/oder Gesetzmäßigkeiten erkennt, welche beim Auswerten des mindestens einen Parameters entsprechend angewandt werden, wobei die Lerndaten insbesondere charakteristische Bremsleistungsniveau- oder Bremsleistungs-Performance-Daten von Bremsen oder Bremssystemen bei unterschiedlichen Umgebungstemperaturen, Luftfeuchtigkeiten und/oder Luftdrücken und/oder Bremsleistungsniveau- oder Bremsleistungs-Performance-Daten von unterschiedlichen Materialien eines Bremsklotzes der mindestens einen Bremse oder des Bremssystems aufweisen.

Die Erfindung betrifft ferner eine Vorrichtung zum Vorhersagen eines Bremsleistungsniveaus oder einer Bremsleistungs-Performance mindestens einer Bremse oder eines Bremssystems eines Schienenfahrzeugs oder eines Verbands mehrerer Schienenfahrzeuge.

Die Vorrichtung weist eine Sensorik zum Erfassen von mindestens einem das Bremsleistungsniveau oder die Bremsleistungs-Performance der mindestens einen Bremse oder des Bremssystems beeinfließenden Parameters sowie eine Auswerteeinrichtung zum Auswerten des mindestens einen das Bremsleistungsniveau oder die Bremsleistungs-Performance der mindestens einen Bremse oder des Bremssystems beeinfließenden Parameters auf.

Insbesondere umfasst die erfindungsgemäße Vorrichtung ferner eine Ausgabe-Schnittstelleneinrichtung zum Ausgeben eines Ergebnisses der von der Auswerteeinrichtung durchgeführten Auswertung der zuvor erfassten Parameter. Das Ergebnis der Auswertung betrifft eine Vorhersage mit Bezug auf das Bremsleistungsniveau oder der Bremsleistungs-Performance der mindestens einen Bremse oder des Bremssystems und/oder eine Abschätzung, wann und/oder wie eine Konditionierung der mindestens einen Bremse oder des Bremssystems durchgeführt werden sollte oder durchzuführen ist.

Wie bereits im Zusammenhang mit dem erfindungsgemäßen Verfahren ausgeführt, handelt es sich bei dem mindestens einen mit Hilfe der Sensorik erfassten Parameter, der das Bremsleistungsniveau oder die Bremsleistungs-Performance der mindestens einen Bremse oder des Bremssystems beeinfließt, um mindestens einen der folgenden Parameter:
- ein insbesondere mittlerer Abstand zwischen einem Rad oder einer Radlauffläche einer dem Rad zugeordneten Bremsscheibe bzw. einem dem Rad zugeordneten Bremsklotz; und/oder
- eine Umgebungstemperatur insbesondere im Bereich der mindestens einen Bremse, eine Luftfeuchtigkeit insbesondere im Bereich der mindestens einen Bremse und/oder ein Luftdruck insbesondere im Bereich der mindestens einen Bremse; und/oder
- eine insbesondere mittlere Temperatur der mindestens einen Bremse.

Gemäß bevorzugten Realisierungen der erfindungsgemäßen Vorrichtung umfasst diese ferner eine Eingabe-Schnittstelleneinrichtung zum Eingeben eines weiteren, insbesondere das Schienenfahrzeug oder den Schienenfahrzeugverband betreffenden Parameters in die Auswerteeinrichtung.

Bei dem weiteren Parameter handelt es sich insbesondere um das Material eines Bremsklotzes der mindestens einen Bremse oder des Bremssystems, um einen Typ eines Bremsklotzes der mindestens einen Bremse oder des Bremssystems, und/oder um ein Alter eines Bremsklotzes der mindestens einen Bremse oder des Bremssystems.

Die Erfindung betrifft ferner eine Vorrichtung zur prädiktiven Aufrechterhaltung eines insbesondere vorab festgelegten oder festlegbaren Bremsleistungsniveaus oder einer insbesondere vorab festgelegten oder festlegbaren Bremsleistungs-Performance mindestens einer Bremse oder eines Bremssystems eines Schienenfahrzeugs oder eines Verbands mehrerer Schienenfahrzeuge.

Die Vorrichtung umfasst eine Vorhersagevorrichtung der zuvor genannten erfindungsgemäßen Art, welche ausgebildet ist, einen Betreiber der Vorrichtung und insbesondere einen Lokführer darauf hinzuweisen, vorzugsweise selektiv eine Konditionierung der mindestens einen Bremse oder des Bremssystems unter Berücksichtigung der Auswerteergebnisse der Auswerteeinrichtung zu initiieren.

Nachfolgend wird unter Bezugnahme auf die beiliegenden Zeichnungen die Erfindung anhand von Ausführungsbeispielen näher beschrieben.

Es zeigen:
- FIG. 1: schematisch ein Verband mehrerer Schienenfahrzeuge, wobei jeder Wagen des Schienenfahrzeugverbands mit einem Überwachungssystem gemäß einer exemplarischen Ausführungsform der Erfindung versehen ist;
- FIG. 2: schematisch eine erste exemplarische Ausführungsform des bei den Wagen des Schienenfahrzeugverbands gemäß FIG. 1 zum Einsatz kommenden Überwachungssystems;
- FIG. 3: schematisch eine zweite exemplarische Ausführungsform des bei jedem Wagen des Schienenfahrzeugverbands gemäß FIG. 1 zum Einsatz kommenden Überwachungssystems;
- FIG. 4: schematisch ein Ablaufdiagramm zum Erläutern der Funktionsweise des Überwachungssystems gemäß FIG. 2; und
- FIG. 5: schematisch ein Ablaufdiagramm zum Erläutern der Funktionsweise des Überwachungssystems gemäß FIG. 3.

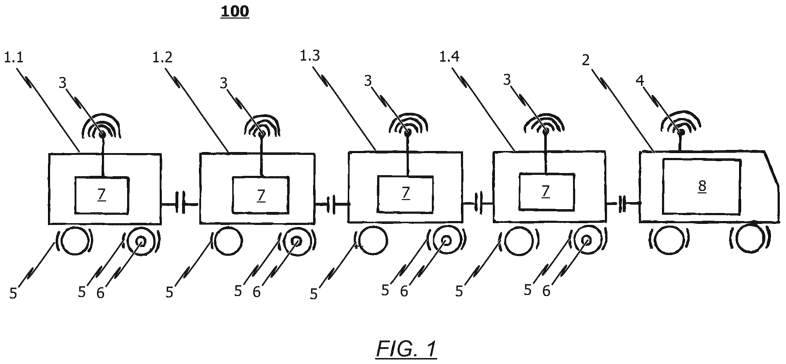

In FIG. 1 ist schematisch ein Verband 100 mehrerer Schienenfahrzeuge 1.1-1.4; 2 gezeigt. Hierbei handelt es sich um einen Triebwagen 2 mit insgesamt vier angeschlossenen Güterwagen 1.1-1.4.

Jeder Güterwagen 1.1-1.4 ist mit einem Bremssystem 5 ausgerüstet, wobei jedes Bremssystem 5 mindestens eine Klotzbremse aufweist.

Jeder Güterwagen 1.1-1.4 umfasst ein entsprechendes Überwachungssystem 7, welches ausgebildet ist, mit Hilfe entsprechender Sensoren 9.1-9.10 mindestens einen das Bremsleistungsniveau oder die Bremsleistungs-Performance der mindestens einen Klotzbremse des zu dem Wagen 1.1-1.4 gehörenden Bremssystems 5 beeinfließenden Parameter zu erfassen.

Vorzugsweise ist jeder Wagen 1.1-1.4 mit einem Radnabengenerator 6 zur Energieversorgung des zugehörigen Überwachungssystems 7 ausgerüstet.

Den entsprechenden Überwachungssystemen 7 ist eine entsprechende Auswerteeinrichtung zugeordnet. Die Auswerteeinrichtung kann Teil des Überwachungssystems 7 sein. Denkbar ist es jedoch auch, dass eine zentrale Auswerteeinrichtung zum Einsatz kommt, die Teil einer Signalisierungseinrichtung 8 im Triebwagen (Lokomotive 2) des Fahrzeugverbands 100 ist.

Die Signalisierungseinrichtung 8 umfasst insbesondere eine akustische und/oder optische Ausgabeschnittstelle, um bedarfsweise eine Vorhersage mit Bezug auf das Bremsleistungsniveau oder der Bremsleistungs-Performance der einzelnen Bremsen 5 der Wagen 1.1-1.4 und/oder eine Abschätzung auszugeben, wann und ggf. wie eine Konditionierung mindestens einer Bremse 5 der Wagen 1.1-1.4 durchgeführt werden sollte oder durchzuführen ist.

Den einzelnen Überwachungssystemen 7 ist eine drahtlose Kommunikationseinrichtung 3 zugeordnet, über welche die Überwachungssysteme 7 mit einer drahtlosen Kommunikationseinrichtung 4 der Signalisierungseinrichtung 8 kommunizieren können. Bei den drahtlosen Kommunikationseinrichtungen 3, 4 handelt es sich insbesondere um Funk- oder Bluetooth-Übertragungseinrichtungen.

Die Auswerteeinrichtung, welche beispielsweise Teil der Signalisierungseinrichtung 8 ist, dient dazu, die einzelnen das Bremsleistungsniveau oder die Bremsleistungs-Performance der Bremsen 5 beeinfließenden Parameter auszuwerten und das Ergebnis der Auswertung über die Ausgabeschnittstelle auszugeben.

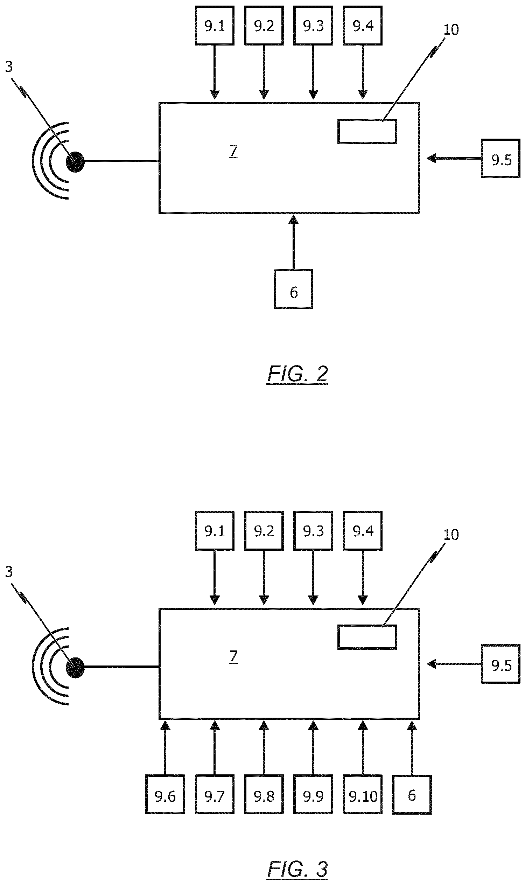

Eine erste exemplarische Ausführungsform eines Überwachungssystems 7 ist in FIG. 2 gezeigt.

Das Überwachungssystem 7 weist verschiedene Eingabe-Schnittstellen auf, um unterschiedliche das Bremsleistungsniveau oder die Bremsleistungs-Performance der mindestens einen Bremse oder des Bremssystems 5 des Wagens beeinfließenden Parameter zu erfassen.

Hierbei handelt es sich beispielsweise um eine Eingabe-Schnittstelle 9.1, über welche eine Umgebungstemperatur der überwachten Bremse 5 in das Überwachungssystem 7 eingegeben wird.

Eine weitere Eingabe-Schnittstelle 9.2 dient dazu, über einen entsprechenden Sensor erfasste Luftfeuchtigkeit oder Luftdruck in das Überwachungssystem 7 einzuspeisen.

Über eine dritte Eingabe-Schnittstelle 9.3 wird ein entsprechendes GPS-Signal in das Überwachungssystem 7 eingegeben, welches die Position des Zugverbands 100 bzw. Wagens 1.1-1.4 anzeigt.

Über eine vierte Eingabe-Schnittstelle 9.4 wird eine Geschwindigkeit des Zugverbands 100 in das Überwachungssystem 7 eingegeben. Die Geschwindigkeit kann entweder aus dem GPS-Signal ermittelt oder aus einem Signal von dem Radnabengenerator 6 generiert sein.

Über eine fünfte Eingabe-Schnittstelle 9.5 wird das Material der Bremsklötze des Bremssystems 5 des Wagens eingegeben. Dieser Parameter kann manuell eingegeben werden; allerdings ist es auch denkbar, dass dieser Parameter mit Hilfe einer Sensorik erfasst wird.

Über einen weiteren Eingang erfolgt die Spannungsversorgung des Überwachungssystems 7. Wie bereits ausgeführt, kann zur Spannungsversorgung ein entsprechender Radnabengenerator 6 vorgesehen sein.

Das Überwachungssystem 7 weist ferner eine Ausgabe-Schnittstelle 3 mit einer Antenne für eine drahtlose Kommunikation mit der Signalisierungseinrichtung 8 in dem Triebwagen (Lokomotive 2) auf.

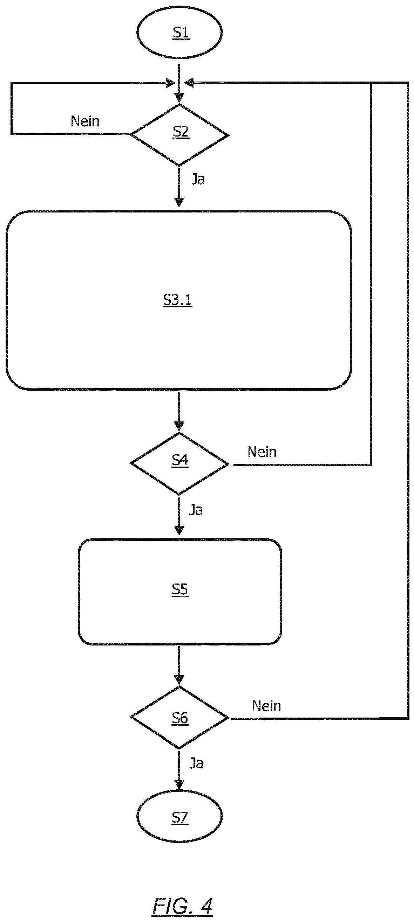

Nachfolgend wird unter Bezugnahme auf das Ablaufdiagramm gemäß FIG. 4 die Funktionsweise des in FIG. 2 schematisch gezeigten Überwachungssystems 7 beschrieben.

Das Verfahren beginnt beim Schritt S1. Zunächst wird im Schritt S2 ermittelt, ob der entsprechende Wagen 1.1-1.4 fährt. Wenn dies der Fall ist, werden mit Hilfe der dem Überwachungssystem 7 zugeordneten Sensorik 9.1-9.5 unterschiedliche das Bremsleistungsniveau oder die Bremsleistungs-Performance des Bremssystems 5 beeinfließende Parameter ermittelt. Hierbei handelt es sich insbesondere um folgende Parameter:
- Umgebungstemperatur
- Luftdruck
- Luftfeuchtigkeit
- GPS-Position
- Geschwindigkeit des Wagens
- Uhrzeit 10

Im Schritt 4 werden die im Schritt 3 ermittelten oder erfassten Parameter ausgewertet, und zwar im Hinblick auf die Frage, ob eine Eisbildung an der überwachten Bremse des Bremssystems 5 zu befürchten ist. Sollte dies der Fall sein, wird im Schritt S5 über die Signalisierungseinrichtung 8 ein entsprechendes optisches und/oder akustisches Signal ausgegeben.

Im Schritt S6 wird geprüft, ob das Überwachungssystem 7 ein- oder ausgeschaltet ist. Wenn das System ausgeschaltet ist, endet das Verfahren (S7). Wenn das System hingegen nicht ausgeschaltet ist, geht das Verfahren zurück zum Schritt S1.

Wenn im Schritt S4 ausgewertet wird, dass die Gefahr einer Eisbildung nicht existiert, geht das Verfahren ebenfalls zurück zum Schritt S1. Gleiches gilt, wenn im Schritt S2 ermittelt wird, dass der Wagen 1.1-1.4 nicht fährt.

Nachfolgend wird unter Bezugnahme auf die Darstellung in FIG. 3 eine zweite exemplarische Ausführungsform des erfindungsgemäßen Überwachungssystems 7 beschrieben.

Die in FIG. 3 gezeigte zweite exemplarische Ausführungsform des erfindungsgemäßen Überwachungssystems 7 entspricht im Wesentlichen der zuvor beschriebenen und in FIG. 2 gezeigten ersten Ausführungsform des Überwachungssystems 7, wobei allerdings weitere Parameter, die einen Einfluss auf das Bremsleistungsniveau oder die Bremsleistungs-Performance haben, in das Überwachungssystem 7 eingegeben werden. Hierbei handelt es sich beispielsweise um das Ladegewicht des Wagens, welches über einen entsprechenden Sensor 9.6 erfasst wird.

Ein weiterer Parameter ist die Temperatur der Bremsen 9.7, welche ebenfalls sensorisch erfasst wird.

Ein zusätzlicher Parameter ist der Bremsdruck 9.8, welcher ebenfalls über eine entsprechende Sensorik erfasst werden kann.

Darüber hinaus kann eine sensorisch erfasste Bremskraft 9.9 eingegeben werden und/oder der ermittelte Abstand zwischen der Radlauffläche zu dem entsprechenden Bremsklotz 9.10.

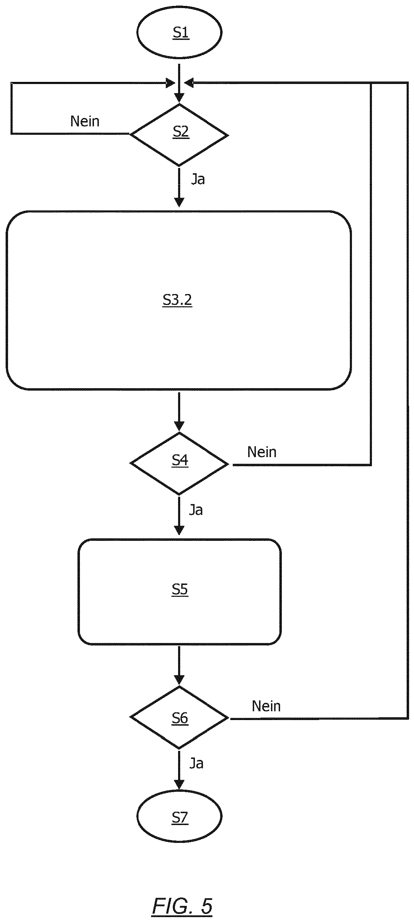

In FIG. 5 ist der Ablauf des in FIG. 3 gezeigten Überwachungssystems 7 beschrieben.

Das Ablaufdiagramm entspricht im Wesentlichen dem Ablaufdiagramm gemäß FIG. 4, wobei allerdings im Schritt S3 weitere Parameter erfasst werden, insbesondere das Ladegewicht, die Bremsentemperatur, der Bremsdruck, die Bremskraft und/oder ein Abstand zwischen der Radlauffläche zu dem Bremsklotz.

Die von dem Überwachungssystem 7 erfassten Parameter dienen insbesondere zum Abschätzen folgender Informationen:
- ein in der Zukunft liegender Zeitpunkt und/oder eine in der Zukunft liegende Zeitperiode, wann bzw. in welcher eine Konditionierung der mindestens einen Bremse 5 oder des Bremssystems 5 durchgeführt werden sollte oder durchzuführen ist;
- ein Bremsdruck, mit welchem bei der Konditionierung der mindestens einen Bremse 5 oder des Bremssystems 5 die mindestens eine Bremse 5 oder das Bremssystem 5 zu beaufschlagen ist;
- eine Zeitdauer, über welche bei der Konditionierung der mindestens einen Bremse 5 oder des Bremssystems 5 die mindestens eine Bremse 5 oder das Bremssystem 5 zu konditionieren ist; und/oder
- eine Bremskraft, welche bei der Konditionierung der mindestens einen Bremse 5 oder des Bremssystems 5 von der mindestens einen Bremse 5 oder dem Bremssystem 5 auf das der mindestens einen Bremse 5 oder dem Bremssystem 5 zugeordneten Rad zu beaufschlagen ist.

Diese Informationen können ebenfalls von der Signalisierungseinrichtung 8 ausgegeben werden.

Die Erfindung ist nicht auf die in den Zeichnungen gezeigten Ausführungsbeispiele beschränkt, sondern ergibt sich aus einer Zusammenschau sämtlicher hierin offenbarter Merkmale.

### Bezugszeichenliste

- 1.1-1.4: Güterwagen
- 2: Triebwagen (Lokomotive)
- 3: drahtlose Kommunikationseinrichtung (Wagen)
- 4: drahtlose Kommunikationseinrichtung (Lokomotive)
- 5: Bremse/Bremssystem
- 6: Radnabengenerator
- 7: Überwachungssystem
- 8: Signalisierungseinrichtung/Ausgabeschnittstelle
- 9.1: Sensor für Umgebungstemperatur/Eingabeschnittstelle hierfür
- 9.2: Sensor für Luftfeuchtigkeit und/oder Luftdruck/Eingabeschnittstelle hierfür
- 9.3: GPS-System/Eingabeschnittstelle für GPS-Signal
- 9.4: Geschwindigkeitssensor/Eingabeschnittstelle für Geschwindigkeit
- 9.5: Eingabeschnittstelle für Material des Bremsklotzes
- 9.6: Ladegewicht-Sensor/Eingabeschnittstelle hierfür
- 9.7: Bremsentemperatur-Sensor/Eingabeschnittstelle hierfür
- 9.8: Bremsdruck-Sensor/Eingabeschnittstelle hierfür
- 9.9: Sensorabstandradlauffläche zu Bremsklotz/Eingabeschnittstelle hierfür
- 9.10: Bremskraft-Sensor/Eingabeschnittstelle hierfür
- 10: Uhr/Uhrzeit

- 100: Zugverband

## Patentansprüche

1. Verfahren zum Vorhersagen eines Bremsleistungsniveaus oder einer Bremsleistungs-Performance mindestens einer Bremse oder eines Bremssystems (5) eines Schienenfahrzeugs (1.1-1.4; 2) oder eines Verbands (100) mehrerer Schienenfahrzeuge (1.1-1.4; 2), wobei das Verfahren die folgenden Verfahrensschritte aufweist:
(i) Erfassen von mindestens einem das Bremsleistungsniveau oder die Bremsleistungs-Performance der mindestens einen Bremse oder des Bremssystems (5) beeinfließenden Parameters;
(ii) Auswerten des mindestens einen das Bremsleistungsniveau oder die Bremsleistungs-Performance der mindestens einen Bremse oder des Bremssystems (5) beeinfließenden Parameters; und
(iii) Ausgeben eines Ergebnisses der Auswertung, welches:
- eine Vorhersage mit Bezug auf das Bremsleistungsniveau oder der Bremsleistungs-Performance der mindestens einen Bremse oder des Bremssystems (5) betrifft; und/oder
- eine Abschätzung betrifft, wann und ggf. wie eine Konditionierung der mindestens einen Bremse oder des Bremssystems (5) durchgeführt werden sollte oder durchzuführen ist.

2. Verfahren nach Anspruch 1,
wobei im Verfahrensschritt (i) als mindestens ein Parameter:
- ein insbesondere mittlerer Abstand zwischen eines Rads oder einer Radlauffläche eines Rads und einem dem Rad zugeordneten Bremsklotz der mindestens einen Bremse (5) erfasst wird; und/oder
- eine Umgebungstemperatur insbesondere im Bereich der mindestens einen Bremse (5), eine Luftfeuchtigkeit insbesondere im Bereich der mindestens einen Bremse (5) und/oder ein Luftdruck insbesondere im Bereich der mindestens einen Bremse (5) erfasst werden/wird; und/oder
- eine insbesondere mittlere Temperatur der mindestens einen Bremse (5) erfasst wird.

3. Verfahren nach Anspruch 1 oder 2,
wobei im Verfahrensschritt (ii) der mindestens eine im Verfahrensschritt (i) erfasste Parameter und zusätzlich mindestens ein weiterer, insbesondere das Schienenfahrzeug (1.1-1.4; 2) oder den Schienenfahrzeugverband betreffende Parameter ausgewertet werden.

4. Verfahren nach Anspruch 3,
wobei der mindestens eine weitere, insbesondere das Schienenfahrzeug (1.1-1.4; 2) oder den Schienenfahrzeugverband (100) betreffende Parameter ein Material eines Bremsklotzes der mindestens einen Bremse (5), einen Typ eines Bremsklotzes der mindestens einen Bremse (5), und/oder ein Alter eines Bremsklotzes der mindestens einen Bremse (5) betrifft.

5. Verfahren nach Anspruch 4,
wobei der Bremsklotztyp einen Bremsklotz mit einer LL-Bremssohle, einen Bremsklotz mit einer Komposit-Bremssohle bzw. K-Sohle, oder einen Bremsklotz mit einer Grauguss-Bremssohle betrifft.

6. Verfahren nach einem der Ansprüche 3 bis 5,
wobei der mindestens eine weitere, insbesondere das Schienenfahrzeug (1.1-1.4; 2) oder den Schienenfahrzeugverband (100) betreffende Parameter ein Gesamtgewicht des Schienenfahrzeugs (1.1-1.4; 2) oder des Schienenfahrzeugverbands (100) und/oder ein Gewicht einer von dem Schienenfahrzeug (1.1-1.4; 2) oder dem Schienenfahrzeugverband (100) transportierten Zuladung betrifft.

7. Verfahren nach einem der Ansprüche 1 bis 6,
wobei im Verfahrensschritt (iii) ein Ergebnis ausgegeben wird, welches eine Abschätzung betrifft, wann eine Konditionierung der mindestens einen Bremse oder des Bremssystems (5) durchgeführt werden sollte oder durchzuführen ist, wobei zum Abschätzen, wann eine Konditionierung der mindestens einen Bremse oder des Bremssystems (5) durchgeführt werden sollte oder durchzuführen ist, mindestens einer der folgenden Parameter berücksichtigt wird:
(a) eine aktuelle Position, insbesondere GPS-Position, des Schienenfahrzeugs (1.1-1.4; 2) oder des Schienenfahrzeugverbands (100);
(b) eine aktuelle Geschwindigkeit des Schienenfahrzeugs (1.1-1.4; 2) oder des Schienenfahrzeugverbands (100);
(c) eine in einem für einen zu befahrenden Streckenabschnitt vorgegebene insbesondere mittlere Geschwindigkeit des Schienenfahrzeugs (1.1-1.4; 2) oder des Schienenfahrzeugverbands (100); und/oder
(d) eine aktuelle örtliche Uhrzeit.

8. Verfahren nach einem der Ansprüche 1 bis 7,
wobei im Verfahrensschritt (i) als mindestens ein Parameter ein der mindestens einen Bremse (5) zur Verfügung stellbarerer insbesondere mittlerer Bremsdruck erfasst wird.

9. Verfahren nach einem der Ansprüche 1 bis 8,
wobei im Verfahrensschritt (iii) mindestens eine der folgenden Informationen ausgegeben wird:
- ein in der Zukunft liegender Zeitpunkt und/oder eine in der Zukunft liegende Zeitperiode, wann bzw. in welcher eine Konditionierung der mindestens einen Bremse oder des Bremssystems (5) durchgeführt werden sollte oder durchzuführen ist;
- ein Bremsdruck, mit welchem bei der Konditionierung der mindestens einen Bremse oder des Bremssystems (5) die mindestens eine Bremse oder das Bremssystem (5) zu beaufschlagen ist;
- eine Zeitdauer, über welche bei der Konditionierung der mindestens einen Bremse oder des Bremssystems (5) die mindestens eine Bremse oder das Bremssystem (5) zu konditionieren ist; und/oder
- eine Bremskraft, welche bei der Konditionierung der mindestens einen Bremse oder des Bremssystems (5) von der mindestens einen Bremse oder dem Bremssystem (5) auf das der mindestens einen Bremse oder dem Bremssystem (5) zugeordneten Rad zu beaufschlagen ist.

10. Verfahren nach einem der Ansprüche 1 bis 9,
wobei zum Auswerten des mindestens einen das Bremsleistungsniveau oder die Bremsleistungs-Performance der mindestens einen Bremse oder des Bremssystems (5) beeinfließenden Parameters der mindestens eine im Verfahrensschritt (i) erfasste Parameter und/oder mindestens ein weiterer, insbesondere das Schienenfahrzeug (1.1-1.4; 2) oder den Schienenfahrzeugverband (100) betreffender Parameter in einen Vorhersage-Algorithmus eingegeben werden, in welchem die eingegebenen Parameter gemäß Klassifikationen in unterschiedliche Kategorien eingeteilt werden, die sich durch charakteristische Muster unterscheiden.

11. Verfahren nach einem der Ansprüche 1 bis 10,
wobei das Verfahren ferner den Verfahrensschritt des Durchführens einer Lernphase eines Vorhersage-Algorithmus aufweist, wobei in der Lernphase Lerndaten in den Vorhersage-Algorithmus eingegeben werden, und wobei der Vorhersage-Algorithmus in den eingegebenen Lerndaten Muster und/oder Gesetzmäßigkeiten erkennt, welche beim Auswerten des im Verfahrensschritt (i) erfassten mindestens einen Parameters entsprechend angewandt werden, wobei die Lerndaten insbesondere charakteristische Bremsleistungsniveau- oder Bremsleistungs-Performance-Daten von Bremsen oder Bremssystemen (5) bei unterschiedlichen Umgebungstemperaturen, Luftfeuchtigkeiten und/oder Luftdrücken und/oder Bremsleistungsniveau- oder Bremsleistungs-Performance-Daten von unterschiedlichen Materialien eines Bremsklotzes der mindestens einen Bremse oder des Bremssystems (5) aufweisen.

12. Vorrichtung zum Vorhersagen eines Bremsleistungsniveaus oder einer Bremsleistungs-Performance mindestens einer Bremse oder eines Bremssystems (5) eines Schienenfahrzeugs (1.1-1.4; 2) oder eines Verbands (100) mehrerer Schienenfahrzeuge (1.1-1.4; 2), wobei die Vorrichtung Folgendes aufweist:
(i) eine Sensorik (9.1-9.10) zum Erfassen von mindestens einem das Bremsleistungsniveau oder die Bremsleistungs-Performance der mindestens einen Bremse oder des Bremssystems (5) beeinfließenden Parameters;
(ii) eine Auswerteeinrichtung zum Auswerten des mindestens einen das Bremsleistungsniveau oder die Bremsleistungs-Performance der mindestens einen Bremse oder des Bremssystems (5) beeinfließenden Parameters; und
(iii) eine Ausgabe-Schnittstelleneinrichtung (8) zum Ausgeben eines Ergebnisses der Auswertung, welches:
- eine Vorhersage mit Bezug auf das Bremsleistungsniveau oder der Bremsleistungs-Performance der mindestens einen Bremse oder des Bremssystems (5) betrifft; und/oder
- eine Abschätzung betrifft, wann und/oder wie eine Konditionierung der mindestens einen Bremse oder des Bremssystems (5) durchgeführt werden sollte oder durchzuführen ist.

13. Vorrichtung nach Anspruch 12,
wobei die Vorrichtung ferner Folgendes aufweist:
- eine Eingabe-Schnittstelleneinrichtung zum Eingeben in die Auswerteeinrichtung eines weiteren, insbesondere das Schienenfahrzeug (1.1-1.4; 2) oder den Schienenfahrzeugverband (100) betreffenden Parameters,
wobei der mindestens eine weitere, insbesondere das Schienenfahrzeug (1.1-1.4; 2) oder den Schienenfahrzeugverband (100) betreffende Parameter insbesondere ein Material eines Bremsklotzes der mindestens einen Bremse oder des Bremssystems (5), einen Typ eines Bremsklotzes der mindestens einen Bremse oder des Bremssystems (5), und/oder ein Alter eines Bremsklotzes der mindestens einen Bremse oder des Bremssystems (5) betrifft.

14. Vorrichtung zur prädiktiven Aufrechterhaltung eines insbesondere vorab festgelegten oder festlegbaren Bremsleistungsniveaus oder einer insbesondere vorab festgelegten oder festlegbaren Bremsleistungs-Performance mindestens einer Bremse oder eines Bremssystems (5) eines Schienenfahrzeugs (1.1-1.4; 2) oder eines Verbands (100) mehrerer Schienenfahrzeuge (1.1-1.4; 2), wobei die Vorrichtung Folgendes aufweist:
- eine Vorhersagevorrichtung gemäß Anspruch 12 oder 13, welche ausgebildet ist, einen Betreiber der Vorrichtung und insbesondere einen Lokführer darauf hinzuweisen, vorzugsweise selektiv eine Konditionierung der mindestens einen Bremse oder des Bremssystems (5) unter Berücksichtigung der Auswerteergebnisse der Auswerteeinrichtung zu initiieren.
